Europäisches Patentamt

European Patent Office

Office européen des brevets

(19)

(11) Veröffentlichungsnummer: **0 010 572**
**B1**

(12) **EUROPÄISCHE PATENTSCHRIFT**

(45) Veröffentlichungstag der Patentschrift: **23.06.82**

(51) Int. Cl.³: **C 01 B 33/28** //B01J29/34

(21) Anmeldenummer: **79102428.4**

(22) Anmeldetag: **13.07.79**

(54) Kristalline Eisensilikate mit Zeolithstruktur sowie Verfahren zu ihrer Herstellung.

(30) Priorität: **19.07.78 DE 2831611**

(43) Veröffentlichungstag der Anmeldung:
**14.05.80 Patentblatt 80/10**

(45) Bekanntmachung des Hinweises auf die Patenterteilung:
**23.06.82 Patentblatt 82/25**

(84) Benannte Vertragsstaaten:
**BE DE FR GB NL**

(56) Entgegenhaltungen:
**DE - A - 2 755 770**
**US - A - 3 769 386**
**US - A - 3 981 970**
**US - A - 4 022 714**
**US - A - 4 075 280**

(73) Patentinhaber: **BASF Aktiengesellschaft**
**Carl-Bosch-Strasse 38**
**D-6700 Ludwigshafen (DE)** .

(72) Erfinder: **Marosi, Laszlo, Dr.-Chem.**
**Londoner Ring 11**
**D-6700 Ludwigshafen (DE)**
Erfinder: **Stabenow, Joachim, Dr.-Phys.**
**Am Feldrain 22**
**D-6940 Weinheim (DE)**
Erfinder: **Schwarzmann, Matthias, Dr.-Chem**
**Carl-Bosch-Strasse 54**
**D-6703 Limburgerhof (DE)**

## Kristalline Eisensilikate mit Zeolithstruktur sowie Verfahren zu ihrer Herstellung

Die Erfindung betrifft ein Verfahren zur Herstellung von kristallinen Eisensilikaten mit Zeolithstruktur sowie kristalline Eisensilikate.

Die gebräuchlichsten Zeolithe des A-, X- und Y-Typs haben eine große technische Bedeutung erlangt. Sie werden als Ionenaustauscher, Molekularsiebe und Katalysatoren technisch eingesetzt. Technische Verfahren wie das katalytische und hydrierende Kracken von Kohlenwasserstoffen werden mit Zeolithkatalysatoren durchgeführt. Neuerdings gewinnen Zeolithe vom Typ ZSM-5 oder ZSM-8 zunehmend an Interesse, mit denen neuartige Reaktionen, wie z.B. die Umwandlung von Methanol in ungesättigte Kohlenwasserstoffe katalysiert werden können.

Wegen dieser vielseitigen technischen Anwendbarkeit versucht man seit längerer Zeit, neue Zeolithe zu synthetisieren, um dadurch spezifisch wirkende Adsorptionsmittel und Katalysatoren zu erhalten.

Zeolithe sind kristalline Aluminosilikate, die aus einem dreidimensionalen Netzwerk von $SiO_4$- und $AlO_4$-Tetraeder aufgebaut sind. Ihre Zusammensetzung läßt sich aus einem Polysilikat $[SiO_{4/2}]$ ableiten. Ersetzt man einen Teil der Si-Atome durch Al-Atome, werden die fehlenden Valenzelektronen durch Einbau von Kationen nachgeliefert. Die Verknüpfung der $SiO_4$- und $AlO_4$-Tetraeder führt zu Gerüststrukturen, die große Hohlräume aufweisen, so daß neben Kationen auch Wasser eingelagert wird. Die Kationen sind gegen andere Kationen leicht austauschbar und auch das eingelargerte Wasser läßt sich unter Beibehaltung der Kristallstruktur reversibel entfernen oder durch andere Moleküle ersetzen. Darauf beruht die Wirkung der Zeolithe als Ionenaustauscher, Molekularsiebe und Katalysatoren.

Eine Möglichkeit, neuartige Zeolithe zu erhalten, besteht in der Gerüstsubstitution, d.h. im isomorphen Ersatz von Al bzw. Silizium durch andere Elemente. Durch geeignete Wahl der Synthesebedingungen konnten bis heute verschiedene, gerüstsubstituierte Zeolithe hergestellt werden, die an Stelle von Aluminium beispielsweise Gallium oder Beryllium, an Stelle von Silizium Germanium oder Phosphor enthalten. Auch über die Synthese von Borosilikatzeolithen wurde berichtet.

Es wurde nun gefunden, daß man neue kristalline Eisensilikate mit einer dem ZSM-5-Typ ähnlichen Struktur aus einer Mischung von reaktivem $SiO_2$, $Na_2O$ und Fe-(III)-oxid und/oder Fe-(III)-hydroxid bei Temperaturen von 100 bis 200°C in einer wäßrigen Aminlösung unter dem Eigendruck der Lösung erhält, wenn man als Ausgangsmaterial technisches Wasserglas, das geringe Mengen gelöstes Aluminiumoxid enthält, verwendet, und als Lösungsmittel eine wäßrige Lösung von Hexamethylendiamin.

Ein weiterer Gegenstand der Erfindung sind kristalline Eisensilikate mit ZSM-5 ähnlicher Zeolithstruktur, die nach diesem Verfahren hergestellt worden sind.

Der Anmeldungsgegenstand unterscheidet sich von dem in der DE—A—2 755 770 beschriebenen Stand der Technik dadurch, daß als Ausgangsmaterial technisches Wasserglas als $SiO_2$-Komponente mit einem geringen Gehalt an Aluminium verwendet wird, was wichtig für die Ausbildung der Zeolithe auf Eisensilikatbasis ist und daß andererseits durch Einsatz von Hexamethylendiamin definierte Zeolithe mit einer dem ZSM-5-Typ ähnlichen Struktur gebildet werden, die im Gegensatz zu Zeolithen, die mit Hilfe von Monoaminen z.B. n-Butylamin hergestellt wurden, keine Verunreinigungen durch Fremdminerale enthalten.

Eine zweckmäßige Herstellungsweise für diese neuen Eisensilikatzeolithe bestent darin, eine Reaktionsmischung aus technischem Wasserglas, das geringe Mengen gelöstes Aluminium enthält, und $Fe_2O_3$ in einer wäßrigen Hexamethylendiaminlösung 1 bis 5 Tage bzw. 2 bis 4 Tage auf Temperaturen von 140 bis 160°C unter Eigendruck zu erhitzen. Die neuen Zeolithe besitzen zwar eine dem Zeolithen ZSM-5 ähnliche Struktur, unterscheiden sich jedoch von diesem in ihrer Zusammensetzung. Die neuen Zeolithe enthalten Eisen als gerüstaufbauendes Atom. Der Einbau von Eisen in das Kristallgerüst des Zeolithes verursacht eine Vergrößerung der Gitterkonstanten und damit eine Verschiebung der Röntgenbeugungslinien nach höheren d-Werten. Diese Verschiebung der Beugungslinien ist dem Eisengehalt der Zeolithe proportional. Auch die Untersuchungen mit dem Elektronenstrahl-Mikroanalysator zeigen, daß das Eisen homogen in den einzelnen Kristallen eingebaut ist.

Als siliziumhaltiges Ausgangsmaterial eignet sich insbesondere technisches Wasserglas mit 8 Gew.-% $Na_2O$ und 25—30 Gew.-% $SiO_3$-Gehalt. Technisches Wasserglas enthält stets geringe Mengen gelöstes Aluminiumoxid, das sich sehr vorteilhaft auf die Bildung der kristallinen Eisensilikate auswirkt. Das Eisen soll in einer löslichen Form, aus der es Oxide bilden kann, in die Reaktionsmischung eingebracht werden. Dafür eignen sich die Nitrate, Sulfate oder Chloride. Geeignet sind außerdem reaktive Eisensilikatgele, die beispielsweise durch Fällung von Wasserglas mit Eisensalzen hergestellt werden können. Als Aminkomponente wird Hexamethylendiamin eingesetzt. Die Konzentration an Hexamethylendiamin kann zwischen 5 bis 50 Gew.-% betragen. Bevorzugt wird ein Kristallisationsansatz mit einem Gehalt zwischen 10 bis 25 Gew.-% Hexamethylendiamin.

Die erfindungsgemäß hergestellten Zeolithe sind z.B. als Katalysatoren für Krack- und Hydrokrackverfahren und für Isomerisierungsreaktionen verwendbar.

Die nach dem erfindungsgemäßen Verfahren erhaltenen Zeolithe vom ZSM-5 Typ werden in der Regel nicht unmittelbar, sondern erst nach einer Aktivierung als Katalysatoren eingesetzt. Dabei werden die Na-Ionen gegen andere Kationen wie $H^+$, $Ce^{3+}$, $La^{3+}$ oder andere mehrwertige Ionen ausgetauscht. Dies kann mit Hilfe von bekannten Ionenaustauschverfahren erfolgen.

Die Durchführung des erfindungsgemäßen Verfahrens wird an Hand der nachstehenden Beispiele erläutert.

Die angegebenen Beugungsdiagramme wurden mit einem automatischen Phillips-Diffraktometer APD-10 hergestellt. Es wurde Kupferstrahlung zusammen mit einem Graphitmonochromator verwendet.

Die angegebenen Analysenwerte beziehen sich auf Trockenbasis. Vor der chemischen Analyse wurden die Substanzen bei 550°C so lange kalziniert, bis die eingeschlossenen Amine verbrannt waren. Die Differenz zu 100% ergibt sich durch eine geringe Menge adsorbierten Wassers.

Beispiel 1

Es werden drei Lösungen hergestellt. Lösung 1 besteht aus 32,66 g technischem Wasserglas (8 Gew.-% $Na_2O$-; 28 Gew.-% $SiO_2$- und 0,18 Gew.-% $Al_2O_3$-Gehalt) und 35,20 g Wasser. Lösung 2 besteht aus 30 g einer 50% igen wäßrigen Hexamethylendiaminlösung und Lösung 3 aus 50,83 g Wasser, 2,47 g 96% iger Schwefelsäure und 1,24 g $Fe_2(SO_4)_3 \cdot 18\ H_2O$. Die Lösungen 2 und 3 werden nacheinander in der genannten Reihenfolge zu Lösung 1 unter Rühren hinzugegeben. Die erhaltene Mischung wird in einem Stahlautoklaven 5 Tage unter ihrem Eigendruck auf 150°C erhitzt. Das erhaltene Produkt wird filtriert, gewaschen und bei 100°C getrocknet. Laut Röntgenanalyse besteht es aus gut kristallisiertem Eisensilikatzeolith.

Die chemische Analyse ergab folgende Werte:
0,42 Gew.-% $Na_2O$; 2,9 Gew.-% $Fe_2O_3$; 88,6 Gew.-% $SiO_2$; 0,64 Gew.-% $Al_2O_3$. Das Ergebnis der Röntgenbeugungsanalyse ist in der Tabelle 1 wiedergegeben.

Beispiel 2

Dieses Beispiel unterscheidet sich von Beispiel 1 dadurch, daß 2,48 g $Fe_2(SO_4)_3 \cdot 18\ H_2O$ verwendet werden.

Beispiel 3

Dieses Beispiel unterscheidet sich von Beispiel 1 dadurch, daß 3,72 g $Fe_2(SO_4)_3 \cdot 18\ H_2O$ verwendet werden.

Die kristallinen Produkte der Beispiele 2 und 3 ergeben ein Röntgenbeugungsdiagramm, das dem des bekannten Zeolithen ZSM-5 ähnlich ist.

## Tabelle 1

| Netzebenenabstände d (Å) | Relative Intensität $(I/I_0)$ |
|---|---|
| 11,17 | 53 |
| 10,03 | 48 |
| 6,75 | 4 |
| 6,40 | 3 |
| 6,00 | 6 |
| 5,60 | 5 |
| 5,00 | 4 |
| 4,40 | 16 |
| 3,85 | 100 |
| 3,72 | 46 |
| 3,66 | 22 |
| 3,32 | 4 |
| 3,05 | 6 |
| 2,99 | 14 |
| 2,62 | 4 |
| 2,50 | 5 |
| 2,41 | 4 |
| 2,00 | 9 |
| 1,99 | 8 |

**Neue Patentansprüche**

1. Verfahren zur Herstellung eines kristallinen Eisensilikats mit einer dem ZSM-5-Typ ähnlichen Struktur aus einer Mischung von reaktivem $SiO_2$, $Na_2O$ und Fe-(III)-oxid und/oder Fe-(III)-hydroxid bei Temperaturen von 100 bis 200°C in einer wäßrigen Aminlösung unter dem Eigendruck der Lösung, dadurch gekennzeichnet, daß man als Ausgangsmaterial technisches Wasserglas, das geringe Mengen gelöstes Aluminiumoxid enthält, verwendet, und als Lösungsmittel eine wäßrige Lösung von Hexamethylendiamin.

2. Kristallines Eisensilikat mit ZSM-5 ähnlicher Zeolithstruktur, hergestellt nach dem Verfahren nach Anspruch 1.

**Claims**

1. A process for the production of a crystalline iron silicate, having a structure similar to that of a zeolite of the ZSM-5 type, from a mixture of reactive $SiO_2$, $Na_2O$, iron(III) oxide and/or iron(III) hydroxide at a temperature of from 100°C to 200°C in an aqueous amine solution under the autogenous pressure of the solution, characterized in that technical-grade waterglass containing small amounts of dissolved aluminium oxide is used as starting material, and an aqueous solution of hexamethylendiamine is used as solvent.

2. A crystalline iron silicate having a structure similar to that of a zeolite of the ZSM-5 type, produced by the process as claimed in claim 1.

**Revendications**

1. Procédé pour la préparation d'un silicate de fer cristallin à structure analogue à celle du type ZSM-5, à partir d'un mélange de SiO$_2$ réactif, de Na$_2$O et d'oxyde ferrique et/ou d'hydroxyde ferrique, à une température de 100 à 200°C dans une solution aqueuse d'amine sous la pression propre de la solution, caractérisé en ce qu'on utilise, en tant que substance de départ, un silicate de sodium industriel qui contient de petites quantités d'oxyde d'aluminium dissous et, en tant que solvent, une solution aqueuse d'hexaméthylènediamine.

2. Silicate de fer cristallin à structure zéolitique analogue à celle des zéolites de type ZSM-5, préparé suivant le procédé de la revendication 1.